# EUROPEAN PATENT SPECIFICATION

(11) **EP 0 641 050 B1**
(45) Date of publication and mention of the grant of the patent: **11.11.1998**
(21) Application number: 94113238.3
(22) Date of filing: 24.08.1994
(51) Int. Cl.: H01S 3/036, H01S 3/034, H01S 3/07

(54) **Gas laser oscillator**
Gas-Laser Oszillator
Oscillateur laser à gaz

(30) Priority: 26.08.1993 JP 211241/93
(43) Date of publication of application: 01.03.1995
(73) Proprietor: MATSUSHITA ELECTRIC INDUSTRIAL CO., LTD., Kadoma-shi, Osaka-fu, 571 (JP)
(72) Inventor: Katoh, Takuma, Sanda City, 669-13 (JP); Karasaki, Hidehiko, Ashiya City, 659 (JP); Hongu, Hitoshi, Kawanishi City, 666 (JP)
(74) Representative: Dr. Elisabeth Jung Dr. Jürgen Schirdewahn Dipl.-Ing. Claus Gernhardt

(56) References cited:
- EP-A- 0 109 025
- EP-A- 0 130 346
- EP-A- 0 439 608
- US-A- 4 672 621
- PATENT ABSTRACTS OF JAPAN vol. 12, no. 287 (E-643) (3134) 5 August 1988 & JP-A-63 064 377 (MITSUBISHI ELECTRIC) 22 March 1988
- PATENT ABSTRACTS OF JAPAN vol. 12, no. 211 (E-622) (3058) 16 June 1988 & JP-A-63 009 178 (ROMATSU) 14 January 1988
- PATENT ABSTRACTS OF JAPAN vol. 11, no. 325 (E-551) (2772) 22 October 1987 & JP-A-62 114 282 (NEC) 26 May 1987

## Description

### FIELD OF THE INVENTION AND RELATED ART STATEMENT

### 1.FIELD OF THE INVENTION

The present invention relates to a gas laser oscillator in which laser gas is circulated in a laser tube, and from which outputs laser beam excited in a discharge area in the laser tube.

### 2.DESCRIPTION OF THE RELATED ART

In recent years, gas laser oscillators are widely used for drilling, cutting, welding or treating a surface of materials of high hardness, and there is a great demand particularly in a factory automation field.

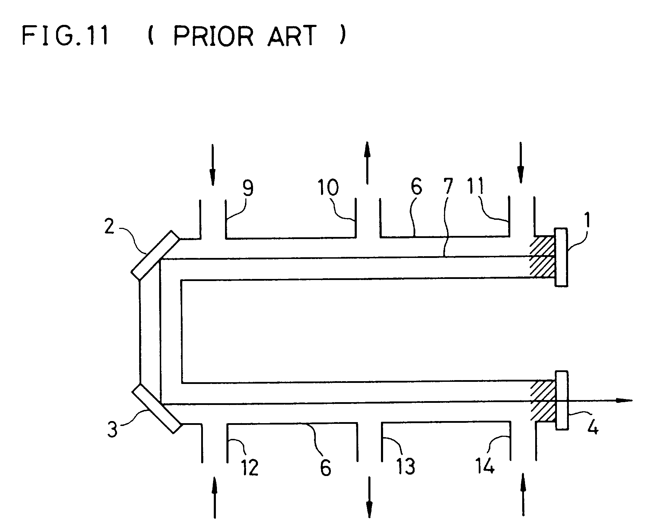

As one example of the conventional gas laser oscillator, a conventional gas laser oscillator is shown in FIG.11. The conventional gas laser oscillator of FIG.11 is disclosed in the Gazette of the Japanese unexamined patent application JP-A-1204486. FIG.11 shows a schematic plan view of the conventional gas laser oscillator. The conventional gas laser oscillator comprises a laser tube 6 made of dielectric material such as glass, a total reflector 1 disposed at one end of the laser tube 6, return-beam reflectors 2, 3 for folding a laser beam 7 in the laser tube 6 and a partial reflector 4 disposed at the other end of the laser tube 6. As shown in FIG.11, the laser beam 7 excited in the laser tube 6 is output through the partial reflector 4. The laser gas is led into the laser tube 6 from gas inlet ports 9, 11, 12 and 14, and exhausted from gas outlet ports 10 and 13. In FIG.11, the directions of the gas-flow are indicated by short arrows. A pair of the laser tubes 6, 6 are arranged in parallel, and connected in series so as to reflect laser beam 7 between the total reflector 1 and the partial reflector 4 via return-beam reflectors 2, 3.

As mentioned above, the conventional gas laser oscillator provides the gas inlet ports 9, 11, 12 and 14 adjacent to the total reflector 1, the return-beam reflectors 2, 3 and the partial reflector 4. And, the laser gas is led into the laser tube 6 from the gas inlet ports 9, 11, 12 and 14 by a gas circulation apparatus for providing a high velocity gas-flow in the laser tube 6. That is, the total reflector 1, the return-beam reflectors 2, 3 and the partial reflector 4 are disposed in the gas-flow. The laser gas includes floating powders, oil mists, dusts or the like brought from mechanical portions etc. of the gas laser oscillator. Therefore, such floating powders etc. are apt to stick to mirror portions of the total reflector 1, the return-beam reflector 2, 3 and the partial reflector 4. Thereby, these mirror portions are soiled with the stuck powders etc. more and more as time passes. As a result, output of the conventional gas laser oscillator gradually decreases owing to the soiled mirrors as time passes.

And further, since the total reflector 1, the return-beam reflectors 2, 3 and the partial reflector 4 are disposed near the discharge regions which is formed between respective pair of electrodes, these reflectors 1, 2, 3 and 4 are deteriorated by ultraviolet rays emitted from the discharge region thereby decreasing the life time of the conventional gas laser oscillator.

A gas laser oscillator of the kind defined by the precharacterizing features of claim 1 is known from the EP-A-0 314 810.

### OBJECT AND SUMMARY OF THE INVENTION

An object of the present invention is to provide a gas laser oscillator of the kind defined by the precharacterizing features of claim 1 wherein the reflectors are prevented to be soiled by floating powders etc. in the laser gas and to be deteriorated by the ultraviolet rays emitted from the discharge region.

This object is attained by the characterizing features of claim 1. Advantageous developments of the invention are defined in the subclaims.

Through experimental studies with a number of experiments, the inventors found that a providing of an interval between the reflector and a gas inlet port gives good results for decreasing of amount o stuck powders and for decreasing of ultraviolet rays. The present invention is made based on the above-mentioned experimental researches.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

FIG.1 is a schematic plan view of a gas laser oscillator of a first embodiment in accordance with the present invention, shown omitted of electrodes,
FIG.2 is a side view of an optical resonator of the gas laser oscillator of FIG.1,
FIG.3 is a sectional side view showing a partial reflection unit of the gas laser oscillator of FIG.1,
FIG.4 is a sectional plan view showing the partial reflection unit of FIG.3,
FIG.5 is a sectional plan view showing a return-beam reflection unit in the gas laser oscillator of FIG.1,
FIG.6 is a sectional side view taken on the line VI-VI of FIG.5 showing the return-beam reflection unit,
FIG.7 is a graph showing a relation between amount of powders stuck to a reflector and position of a gas inlet port,
FIG.8 is a graph showing a relation between a pressure and position in the partial reflection unit,
FIG.9 is a sectional side view showing a partial reflection unit of a gas laser oscillator of a second embodiment in accordance with the present invention,
FIG.10 is a graph showing a relation between intensity of ultraviolet lays and a position of a partial reflector to a discharge region, and
FIG.11 is the schematic plan view of the conventional gas laser oscillator.

It will be recognized that some or all of the Figures are schematic representations for purposes of illustration and do not necessarily depict the actual relative sizes or locations of the elements shown.

### DESCRIPTION OF THE PREFERRED EMBODIMENTS

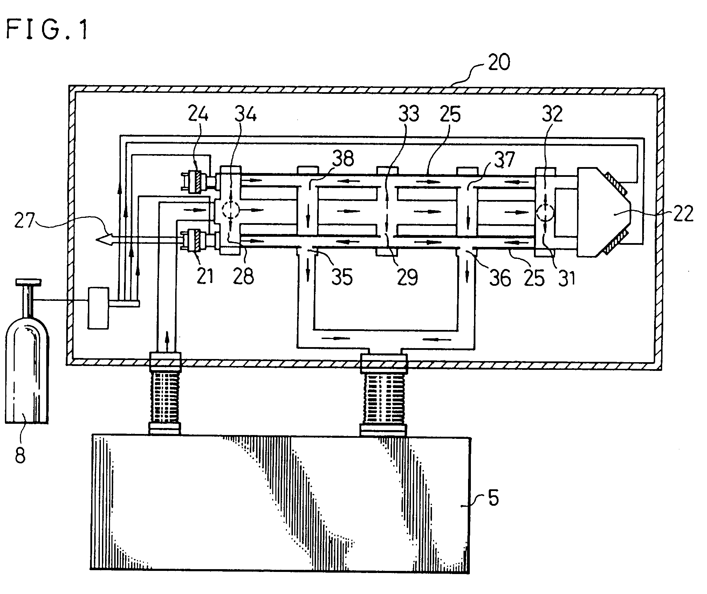

Hereafter, preferred embodiments of the present invention will be described with reference to FIG.1 through FIG.10.

### < FIRST EMBODIMENT >

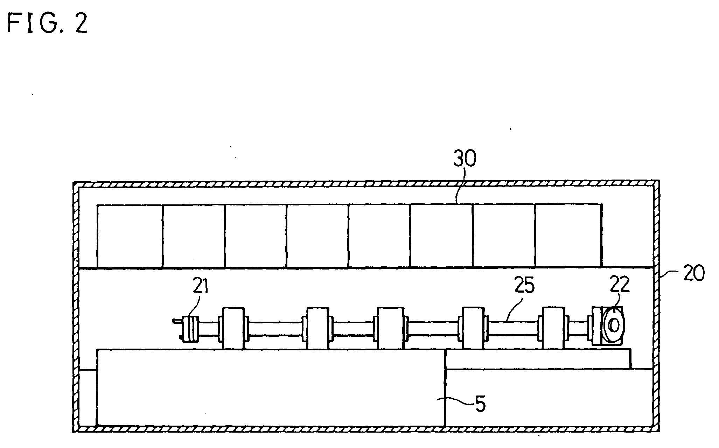

FIG.1 is a schematic plan view of the gas laser oscillator of the first embodiment. FIG.2 is a side view of an optical resonator 20 of the gas laser oscillator of FIG.1.

As shown by short arrows in FIG.1, laser gas is circulated by a gas circulation apparatus 5 for providing a high velocity gas-flow in laser tubes 25 of an optical resonator 20. The optical resonator 20 has a power supply unit 30 (shown in FIG.2) for exciting the laser gas in the laser tube 25 so as to form a discharge region in the laser tube 25. The optical resonator 20 comprises reflectors having reflecting surfaces which are aligned to provide multiple reflection, thereby a laser beam 27 is amplified and output from the optical resonator 20.

The optical resonator 20 has the laser tubes 25, a partial reflection unit 21 for reflecting and outputting the laser beam 27, a return-beam reflection unit 22 for folding the laser beam 27, and a total reflection unit 25 for totally reflecting the laser beam 27. In the optical resonator 20, the laser beam 27 is reflected and amplified between the partial reflection unit 21 and the total reflection unit 24 via return-beam reflection unit 22, and thereby the laser beam 27 is output through the partial reflection unit 21.

The laser gas to be led into the laser tubes 25 is provided by a gas mixture such as of CO₂, N₂, and He. The laser gas is led into the laser tube 25 from gas inlet ports 28, 29, 31, 32, 33 and 34, and is led out from the gas outlet ports 35, 36, 37 and 38. Two sets of the laser tubes 25, 25 having electrodes for generating discharge regions are arranged in parallel as shown in FIG.1, and connected in series to reflect the laser beam 27 between partial reflection unit 21 and the total reflection unit 24. The laser gas is supplied from a laser gas cylinder 8 to the laser tubes 25 through the partial reflection unit 21, the return-beam reflection unit 22 and total reflection unit 24 when the pressure of the laser gas falls below the predetermined pressure.

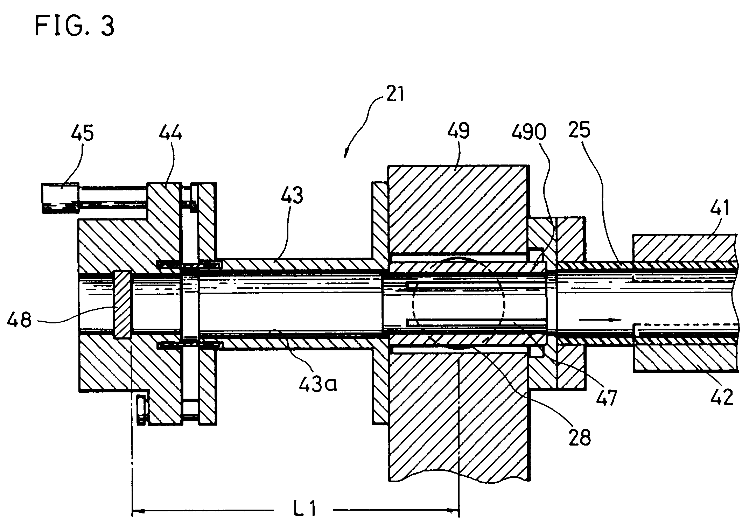

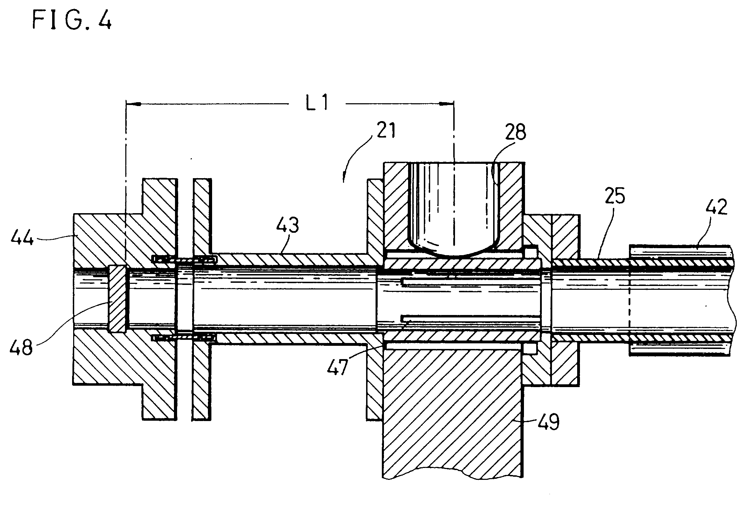

FIG.3 is a sectional side view of the partial reflection unit 21. FIG.4 is a sectional plan view of the partial reflection unit 21 of FIG.3.

As shown in FIGs. 3 and 4, the partial reflection unit 21 comprises a gas introducing unit 49 which is provided at the end of the laser tube 25 having a pair of electrodes 41, 42, a fixed block unit 44 for fixing a partial reflector 48, and a first extension flange unit 43. The gas introducing unit 49 and the fixed block unit 44 are connected with the first extension flange unit 43 to form a through-hole 43a which is aligned with a through-hole of the laser tube 25. The partial reflector 48 is hermetically disposed in the through-hole 43a so as to make multiple reflections between the partial reflector 48 and a total reflector disposed at the other end of the laser tube 25. The gas introducing unit 49 has the gas inlet port 28 for leading the laser gas which is provided by the gas circulation apparatus 5. The laser gas led into the gas inlet port 28 flows through plural slits 47 which are formed to have an axial direction of the laser tube 25 at an inner tube 490 of the gas introducing unit 49. The plural slits 47 are provided to make preferable gas-flow in the laser tube 25. The fixed block unit 44 has adjusting screws 45 for controlling the reflecting angle of the partial reflector 48.

In the first embodiment, an interval L1 (shown in FIG.3) of no less than 120 mm and optimally substantially 120 mm is given by inserting the first extension flange unit 43 between the fixed block unit 44 and the gas introducing unit 49 having the gas inlet port 28 thereon. The interval L1 is a distance between the center of the gas inlet port 28 and the laser-beam reflecting surface of the partial reflector 48. Since the first extension flange unit 43 is provided in the partial reflection unit 21 to arrange the partial reflector 48 at the interval L1 of 120 mm or more from the gas inlet port 28, almost all the laser gas flows from the gas inlet port 28 to the laser tube 25 through the plural slits 47, and the laser gas stands stagnant in the through-hole 43a adjacent to the partial reflector 48. Therefore, the partial reflector 48 is not exposed by the gas-flow including floating powders etc. As a result, substantially no floating powder sticks to the partial reflector 48, and the partial reflector 48 is kept at a clean state in a long time.

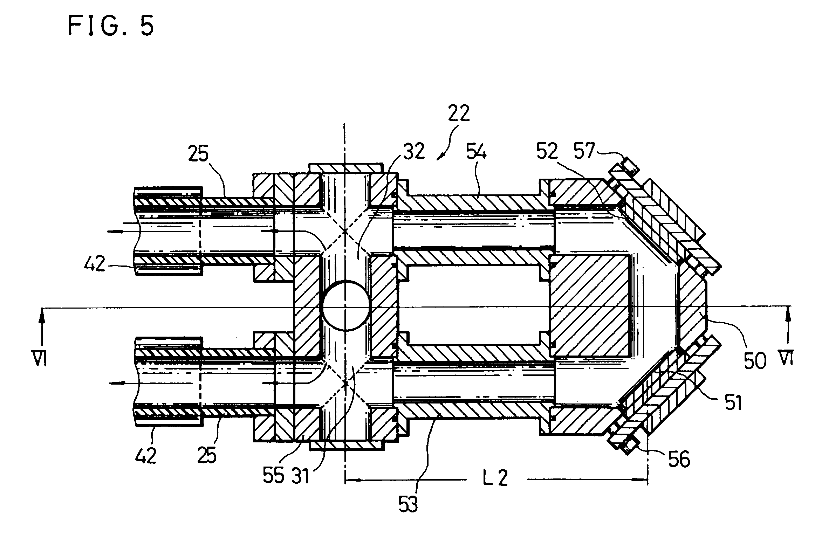

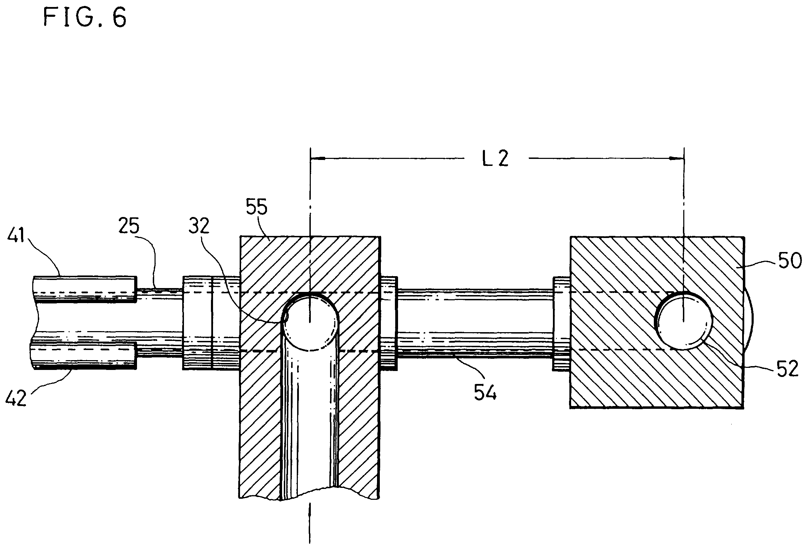

FIG.5 is a sectional plan view of the return-beam reflection unit 22 of the gas laser oscillator of the first embodiment. FIG.6 is a sectional side view taken on the line VI - VI of FIG.5 showing the return-beam reflection unit 22.

In FIGs. 5 and 6, the return-beam reflection unit 22 comprises a gas introducing unit 55 which is arranged at the end of the laser tubes 25, 25 in parallel having electrodes 41, 42, a fixed block unit 50 for fixing two return-beam reflectors 51, 52, and second extension flange units 53, 54. The gas introducing unit 55 and the fixed block unit 50 are connected with the second extension flange units 53, 54 as shown in FIGs. 5 and 6. The return-beam reflectors 51, 52 are disposed to fold the laser beam 27 in order to make multiple reflections between the partial reflector 48 and the total reflector via the return-beam reflectors 51, 52.

The gas introducing unit 55 (FIGs.5 and 6) has the two gas inlet ports 31, 32 where the laser gas circulated by the gas circulation apparatus is led into respective laser tubes 25, 25. The fixed block unit 50 has a pair of adjusting screws 56, 57 for controlling the reflecting angle of respective return-beam reflectors 51, 52.

In the first embodiment, since the second extension flange units 53, 54 are provided between the fixed block unit 50 and the gas introducing unit 55, the gas inlet ports 31, 32 are arranged to have an interval L2 (shown in FIG.5) of 120 mm or more, and optimally substantially about 120 mm. The interval L2 shows a distance between the center of the gas inlet ports 31, 32 and the center of the facing surfaces of the return-beam reflectors 51, 52.

By provision of the second extension flange units 53, 54 in the return-beam reflection unit 22, the interval L2 between the return-beam reflectors 51, 52 and the gas inlet ports 31, 32 is about 120 mm or more. Therefore, almost all the gas-flow is led into the laser tubes 25, 25 from the gas inlet ports 31, 32, as shown by short arrows in FIG.5. And laser gas stands stagnant in the hole adjacent to the return-beam reflectors 51, 52 of the fixed block unit 50. Therefore, the return-beam reflectors 51, 52 are not exposed by the gas-flow including floating powders etc. As a result, substantially no floating powder sticks to the return-beam reflectors 51, 52, and therefore, the return-beam reflectors 51, 52 are kept in a clean state for a long time.

The total reflection unit 24 is constructed by the same configuration as the aforementioned partial reflection unit 21 shown in FIGs. 3 and 4 except that a total reflector for totally reflecting the laser beam 27 (as a mirror) is used instead of the partial reflector 48.

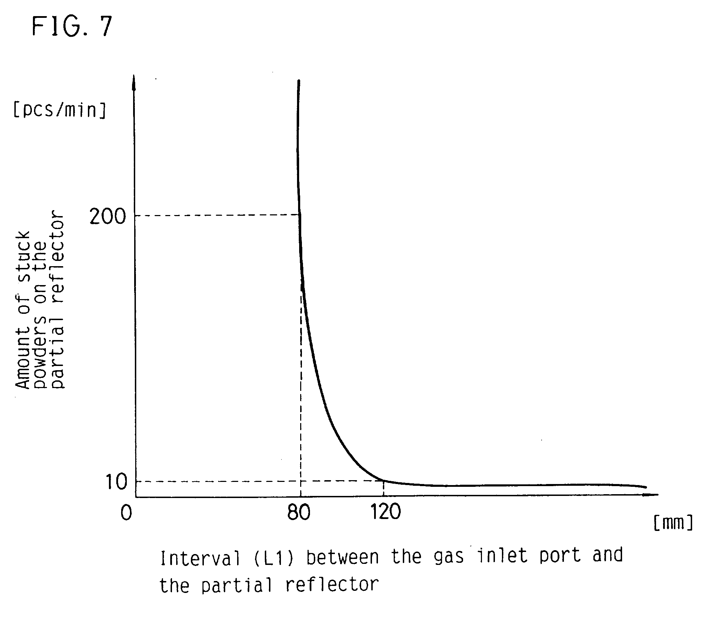

FIG.7 is a graph of a relation between amount of stuck powders on the partial reflector 48 and the interval L1 of the gas inlet port 28 and the partial reflector 48.

The graph of FIG.7 shows a data obtained by detecting amount of stuck powders of 0.2 µm or more in diameter to the partial reflector 48 in the following conditions:

The laser tube 25 has an inside diameter of 40 mm, the laser gas flows at a speed of 300 m/sec, and a pressure of 150 Torr (1 Torr = 1,33 x 10² Pa) of the laser gas is applied.

As is apparent from the graph of FIG.7, in case that the interval L1 between the gas inlet port 28 and the partial reflector 48 is less than 120 mm, more powders are stuck to the partial reflector 48 as the interval L1 is shorter. But, in the case that the interval L1 is more than 120 mm, the amount of the stuck powders on the partial reflector 48 is a constant regardless of change of the interval L1.

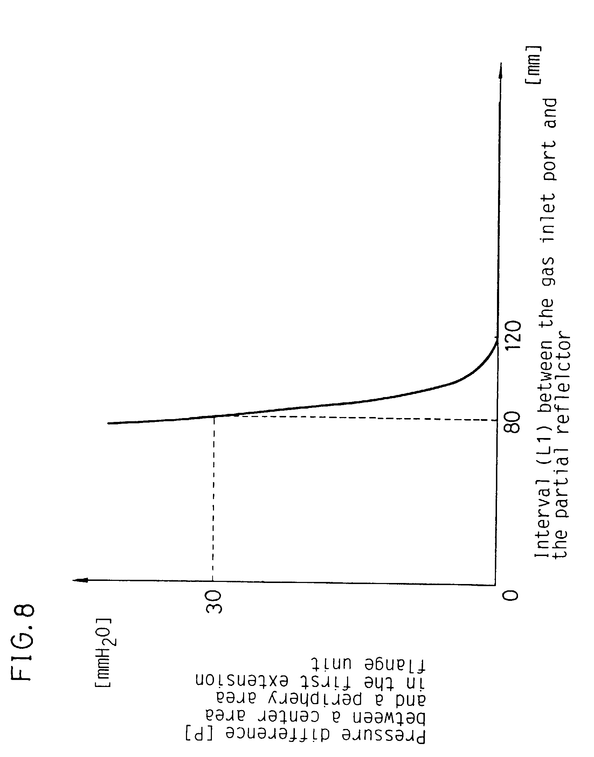

FIG.8 is a graph of a relation between pressure difference in the through-hole 43a (shown in FIG.3) of the first extension flange unit 43 and the interval L1. The pressure difference is measured as a difference between that at a center area of the through-hole 43a of the first extension flange unit 43 and that at a periphery area adjacent to the inner wall of the through-hole 43a.

The graph of FIG.8 shows a data obtained by detecting amount of stuck powders of 0.2 µm or more in diameter to the partial reflector 48 in the following conditions:

The laser tube 25 has an inside diameter of 40 mm, the laser gas flows at a speed of 300 m/sec, and a pressure of 150 Torr of the laser gas is applied.

As shown in FIG.8, the pressure difference P is substantially zero at the interval L1 of 120 mm or more. In other words, the laser gas stands stagnant at the interval L1 of 120 mm or more.

According to the inventor's experiments, the above-mentioned relations shown in FIGs.7 and 8 stand up also in the following conditions:

The laser tube 25 has an inside diameter of below 40 mm, the laser gas flows at a speed of below 300 m/sec, and a pressure of below 150 Torr of the laser gas is applied.

Accordingly, when the partial reflector 48 is arranged at the interval L1 of 120 mm or more from the gas inlet port 28 as the above-mentioned first embodiment, the powders stuck to the partial reflector 48 remarkably decreases in amount.

According to the inventor's experiments, the above-mentioned relations between the interval L1 and the amount of the stuck powders stands up also in the return-beam reflection unit 22 and the total reflection unit 24.

### < SECOND EMBODIMENT >

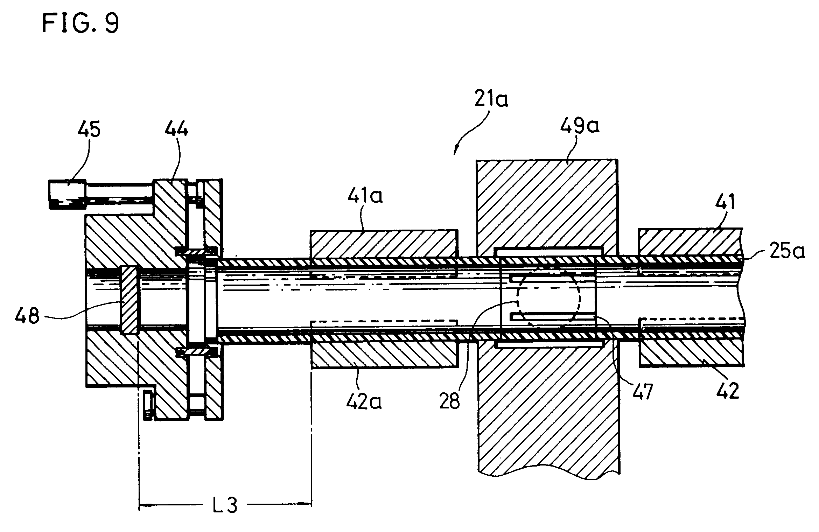

FIG.9 is a sectional side view of a partial reflection unit 21a of a gas laser oscillator of a second embodiment in accordance with the present invention. Corresponding parts and components to the first embodiment are shown by the same numerals and marks, and the description thereon made in the first embodiment similarly apply. Differences and features of this second embodiment from the first embodiment are as follows.

As shown in FIG.9, the partial reflection unit 21a has a fixed block unit 44 for fixing a partial reflector 48 and a gas introducing unit 49a. The fixed block unit 44 is disposed at the end of the laser tube 25, and the gas introducing unit 49a is disposed between the two electrodes 41, 42 and 41a, 42a disposed on the laser tube 25a. Therefore, discharge region is formed between a pair of electrodes 41a and 42a close to the partial reflection unit 44 than to a gas inlet port 28 of the gas introducing unit 49a. In the second embodiment, the electrodes 41a, 42a for generating discharge region are disposed to have an interval L3 of 120 mm or more, and preferably about 120 mm. The intervals L3 shows a distance between the end position of the electrodes 41a, 42a and the laser-beam-reflecting surface of the partial reflector 48 as shown in FIG.9.

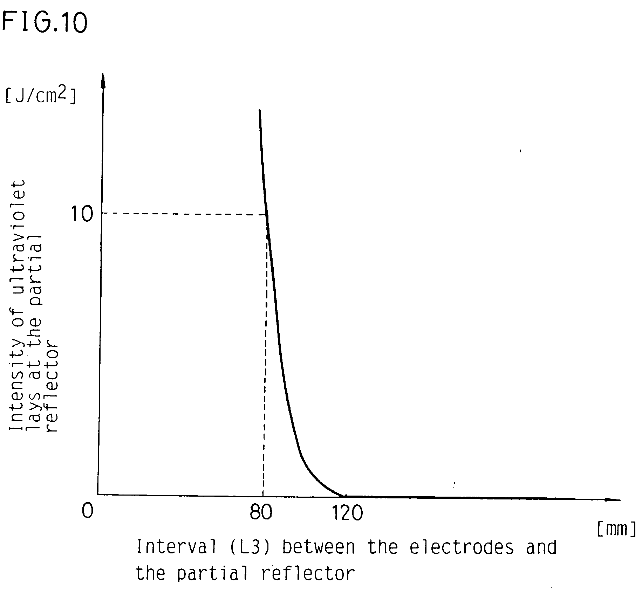

FIG.10 is a graph showing a relation between intensity of ultraviolet lays at the laser-beam-reflecting surface of the partial reflector 48 and the interval L3.

The graph of FIG.10 shows a data obtained by measuring intensity of ultraviolet lays from the discharge region formed between the two electrodes 41a, 42a in the following conditions:

The laser tube 25 of this example has an inside diameter of 40 mm, a pressure of 150 Torr of the laser gas is applied, and an output power of the gas laser oscillator is 2.5 kW.

As is apparent from the graph of FIG.10, in the case that the electrodes 41a, 42a and the partial reflector 48 are arranged to have the interval L3 less than 120 mm, more ultraviolet lays are received by the laser-beam-reflecting surface of the partial reflector 48 as the interval L3 is shorter. But, in the case that the interval L3 is more than 120 mm, the intensity of ultraviolet lays received by the partial reflector 48 is substantially zero regardless of change of the interval L3.

According to the inventor's experiments, the above-mentioned relation shown in FIG.10 stands up also in the following conditions:

The laser tube 25 has an inside diameter of below 40 mm, a pressure of below 150 Torr of the laser gas is applied, and an output power of the gas laser oscillator is below 2.5 kW.

By configurating the gas laser oscillator of the second embodiment with the partial reflection unit 21a so as to form the discharge region at the interval L3 of 120 mm or more from the partial reflector 48, the partial reflector 48 does not receive harmful influence of the ultraviolet lays from the discharge region, and is prevented from deterioration by the ultraviolet lays.

Apart from the above-mentioned second embodiment wherein the partial reflector 48 is arranged to have the interval L3 of 120 mm or more from the discharge region, a modified embodiment may be such that return-beam reflectors and/or a total reflector is arranged to have an interval of 120 mm or more from a discharged region. Therefore, the above-mentioned gas laser oscillator of the modified embodiment can realize that return-beam reflectors and/or a total reflector are/is not deteriorated by the ultraviolet lays, nor be soiled by the floating powders etc. in the laser gas thereby providing the gas laser oscillator to be long-lived.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within scope of the invention.

## Claims

1. A gas laser oscillator comprising:
a laser tube (25) in which laser gas is circulated,
a partial reflection unit (21) which is disposed at one end of said laser tube (25) and has a partial reflector (48) for reflecting and outputting laser beam (27),
a total reflection unit (24) which is disposed at the other end of said laser tube (25) and has a total reflector for reflecting totally laser beam (27) in said laser tube (25),
a pair of electrodes (41, 42) which are disposed surrounding said laser tube (25), and
a first gas introducing unit (49) having a first gas inlet port (28) which is arranged to lead laser gas into one end of said laser tube (25),
characterized in that said first gas introducing unit (49) is disposed with an interval (L1) of 120 mm or more between the center of said first gas inlet port (28) and the laser-beam-reflecting surface of said partial reflector (48), said laser tube (25) has an inside diameter of 40 mm or less, said laser gas flows at a speed of 300 m/sec or less and the pressure of said laser gas is 150 Torr (1 Torr = 1,33 x 10² Pa) or less.

2. A gas laser oscillator in accordance with claim 1 further comprising:
a second gas introducing unit having a second gas inlet port which is arranged to lead laser gas into the other end of said laser tube (25) and is disposed with an interval of 120 mm or more between the center of said second gas inlet port and the laser-beam-reflecting surface of said total reflector.

3. A gas laser oscillator in accordance with claim 1 further comprising:
a return-beam reflection unit (55) having at least two return-beam reflectors (51, 52) which are aligned to provide a return-beam reflection between said partial reflector and said total reflector.

4. A gas laser oscillator in accordance with claim 2 further comprising:
a third gas introducing unit (55) having at least one third gas inlet port (31,32) which is arranged to lead laser gas into said laser tube (25) and is disposed with an interval (L2) of 120 mm or more between the center of said third gas inlet port (31, 32) and the center of the laser-beam-reflecting surface of at least one of said return-beam reflectors (51, 52).

## Patentansprüche

1. Gaslaseroszillator, aufweisend:
eine Laserröhre (25), in welcher Lasergas umgewälzt wird,
eine Partialreflexionseinheit (21), die an einem Ende der Laserröhre (25) angeordnet ist und einen Partialreflektor (48) zum Reflektieren und Ausgeben eines Laserstrahls (27) aufweist,
eine Totalreflexionseinheit (24), die an dem anderen Ende der Laserröhre (25) angeordnet ist, und einen Totalreflektor zum vollständigen Reflektieren des Laserstrahls (27) in der Laserröhre (25) aufweist,
ein Paar von Elektroden (41, 42), welche die Laserröhre (25) umgebend angeordnet sind, und
eine erste Gaseinleiteinheit (49) mit einer ersten Gaseinlaßöffnung (28), die so angeordnet ist, daß Lasergas in ein Ende der Laserröhre (25) geleitet wird,
dadurch gekennzeichnet, daß die erste Gaseinleiteinheit (49) mit einem Zwischenraum (L1) von 120 mm oder mehr zwischen dem Zentrum der ersten Gaseinlaßöffnung (28) und der Laserstrahlreflexionsoberfläche des Partialreflektors (48) angeordnet ist, wobei die Laserstrahlröhre (25) einen Innendurchmesser von 40 mm oder kleiner aufweist, wobei das Lasergas mit einer Geschwindigkeit von 300 m/s oder langsamer strömt und der Druck des Gaslasers 150 Torr (1 Torr = 1,33 x 10² Pa) oder weniger beträgt.

2. Gaslaseroszillator nach Anspruch 1, außerdem aufweisend: eine zweite Gaseinleiteinheit mit einer zweiten Gaseinlaßöffnung, die dazu dient, Lasergas in das andere Ende der Laserröhre (25) zu leiten, und die mit einem Zwischenraum von 120 mm oder weniger zwischen dem Zentrum der zweiten Gaseinlaßöffnung und der Laserstrahlreflexionsoberfläche des Totalreflektors angeordnet ist.

3. Gaslaseroszillator nach Anspruch 1, außerdem aufweisend: eine Strahlrückführreflexionseinheit (55) mit zumindest zwei Strahlrückführreflektoren (51, 52), die so ausgerichtet sind, daß sie eine Strahlrückführreflexion zwischen dem Partialreflektor und dem Totalreflektor bewirken.

4. Gaslaseroszillator nach Anspruch 2, außerdem aufweisend: eine dritte Gaseinleiteinheit (55) mit zumindest einer dritten Gaseinlaßöffnung (31, 32), die dazu dient, Lasergas in die Laserröhre (25) zu leiten und mit einem Zwischenraum (L2) von 120 mm oder mehr zwichen dem Zentrum der dritten Gaseinlaßöffnung (31, 32) und dem Zentrum der Laserstrahlreflexionsoberfläche von zumindestens einem der Strahlrückführreflektoren (51, 52) angeordnet ist.

## Revendications

1. Oscillateur laser à gaz comprenant :
un tube laser (25) dans lequel le gaz laser est mis à circuler,
une unité de réflexion partielle (21) qui est disposée à une extrémité du tube laser (25) et un réflecteur partiel (48) pour réfléchir et sortir le faisceau laser (27),
une unité de réflexion totale (24) qui est disposée à l'autre extrémité dudit tube laser (25) et un réflecteur total pour réfléchir totalement le faisceau laser (27) dans ledit tube laser (25),
une paire d'électrodes (41, 42) qui sont disposées entourant ledit tube laser (25), et
une première unité d'introduction de gaz (49) ayant un premier orifice d'entrée de gaz (28) qui est disposé pour conduire le gaz laser dans une extrémité dudit tube laser (25),
caractérisé en ce que ladite première unité d'introduction de gaz (49) est disposée avec un intervalle (L1) de 120 mm ou plus entre le centre dudit premier orifice d'entrée de gaz (28) et la surface de réflexion du faisceau laser dudit réflecteur partiel (48), ledit tube laser (25) a un diamètre interne de 40 mm ou moins, ledit gaz laser s'écoule à une vitesse de 300 m/sec ou moins et la pression dudit gaz laser est de 150 Torr (1 Torr = 1,33 x 10² Pa) ou moins.

2. Oscillateur laser à gaz selon la revendication 1 comprenant de plus :
une seconde unité d'introduction de gaz ayant un second orifice d'entrée de gaz qui est disposé pour conduire le gaz laser dans l'autre extrémité dudit tube laser (25) et est disposé avec un intervalle de 120 mm ou plus entre le centre dudit second orifice d'entrée de gaz et la surface de réflexion du faisceau laser dudit réflecteur total.

3. Oscillateur laser à gaz selon la revendication 1 comprenant de plus :
une unité de réflecteurs de faisceau de retour (55) ayant au moins deux réflecteurs de faisceau de retour (51, 52) qui sont alignés pour procurer une réflexion de faisceau de retour entre ledit réflecteur partiel et ledit réflecteur total.

4. Oscillateur laser à gaz selon la revendication 2 comprenant de plus :
une troisième unité d'introduction de gaz (55) ayant au moins un troisième orifice d'entrée de gaz (31, 32) qui est disposé pour conduire le gaz laser dans ledit tube laser (25) et est disposé avec un intervalle (L2) de 120 mm ou plus entre le centre dudit troisième orifice d'entrée de gaz (31, 32) et le centre de ladite surface de réflexion de faisceau laser d'au moins un desdits réflecteurs de faisceau de retour (51, 52).
